# EUROPÄISCHE PATENTSCHRIFT

(11) **EP 1 114 755 B1**
(45) Veröffentlichungstag und Bekanntmachung des Hinweises auf die Patenterteilung: **17.09.2003**
(21) Anmeldenummer: 00126370.6
(22) Anmeldetag: 02.12.2000
(51) Int. Cl.: B60R 21/01

(54) **Verfahren zur Kalibrierung eines Überrollsensors**
Method for calibrating a roll over sensor
Procédé d'étalonnage d'un capteur de retournement

(30) Priorität: 08.01.2000 DE 10000535
(43) Veröffentlichungstag der Anmeldung: 11.07.2001
(73) Patentinhaber: Bayerische Motoren Werke Aktiengesellschaft, 80809 München (DE)
(72) Erfinder: Griessbach, Robert, 83629 Weyarn (DE); Fröschl, Joachim, 82211 Herrsching (DE)

(56) Entgegenhaltungen:
- EP-A- 0 965 502
- WO-A-99/05004
- DE-A- 19 547 830
- DE-A- 19 736 328
- US-A- 5 610 575

## Beschreibung

Die Erfindung betrifft ein Verfahren zur Kalibrierung eines Überrollsensors für ein Fahrzeug gemäß dem Oberbegriff des Anspruchs 1.

Bei solchen Überrollsensoren für die Detektion von Überrollvorgängen werden im allgemeinen Beschleunigungssensoren verwendet, die die Ausrichtung eines Fahrzeugs im Raum, insbesondere in den drei Raumachsen, feststellen können.

Problematisch bei der Verwendung von günstiger produzierten Sensoren ist deren Schwankung um die Nullage, welche vor allem durch Temperatureffekte hervorgerufen ist.

Aufgabe der vorliegenden Erfindung ist es, ein Verfahren zu schaffen, mit dem ein eingangs genannter Überrollsensor auf einfache Weise kalibriert werden kann.

Diese Aufgabe wird durch die im Anspruch 1 genannten Merkmale gelöst.

Demgemäß wird die von einem Überrollsensor gemeldete Neigung in wenigstens einer Achse fortwährend über eine bestimmte Wegstrecke gemittelt. Durch die Mittelung über eine zurückgelegte Wegstrecke kompensiert sich die Drift heraus. Der Mittelwert entspricht dann der Nullage.

Vorzugsweise finden Neigungsmessungen und zugeordnete Mittelungen in allen drei Raumachsen statt.

Für Neigungen um die Längsachse ist das oben gewählte Verfahren ausreichend. Bei Neigungen um die Querachse kann es jedoch bei längeren Bergauf- oder Bergabfahrten vorkommen, daß sich - bedingt durch die durchschnittliche Neigung der Straße - Fehler durch das Mittelungsverfahren ergeben.

Zur Vermeidung dieses Effektes wird gemäß Anspruch 1 vorgeschlagen, die durchschnittliche Neigung über eine bestimmte Wegstrecke aus der Luftdruckänderung über diesen Weg zu bestimmen. Genauer gesagt, kann der absolute Luftdruck mittels eines Luftdrucksensors bestimmt und aus der barometrischen Höhenformel die Höhe des Fahrzeugs über Meeresspiegel bestimmt werden. Damit läßt sich auf einfache Weise eine Höhenänderung über eine definierte Fahrstrecke ermitteln. Wetterbedingte Luftdruckschwankungen mitteln sich dabei heraus. Durch den Quotienten aus Höhenänderung zu definierter Fahrstrecke kann die durchschnittliche Neigung über diese Wegstrecke errechnet werden. Mit dieser durchschnittlich berechneten Neigung kann dann die tatsächlich ermittelte, gemittelte Neigung in Fahrtrichtung korrigiert werden.

Drucksensoren sind in vielen Fahrzeugen bereits im Türbereich zur Seitenkollisionsdetektion eingesetzt. Zukünftig wird auch die Motorelektronik einen Luftdrucksensor zur Berücksichtigung des Einflusses des Umgebungsluftdruckes auf die Leistung des Motors aufweisen. Durch die Verwendung eines solchen, bereits vorhandenen Luftdrucksensors für die vorliegende Erfindung vermeidet man den Einsatz von zusätzlichen Hardwarekomponenten.

Die vorliegende Erfindung wird nachfolgend anhand eines konkreten Ausführungsbeispiels und mit Bezug auf die einzige beiliegende Zeichnung näher erläutert.

Die einzige beiliegende Zeichnung zeigt in schematischer Blockschaltweise eine Ausführungsform der vorliegenden Erfindung.

Dabei sind drei Beschleunigungssensoren 11, 12 und 13 in einem Gehäuse eines Überrollsensors 10 angeordnet, welche ihr Signal an eine Auswerteeinrichtung 14 übermitteln.

Die Auswerteeinrichtung 14 wiederum gibt die Neigungssignale an eine Korrektureinheit 15 weiter, welche zudem über eine erste Schnittstellenelektronik 16 eine Information von einem Wegstreckensensor 17, beispielsweise einem Raddrehzahlsensor, zur Verfügung gestellt bekommt.

Überdies ist die Korrektureinheit 15 mit einer zweiten Schnittstellenelektronik 18 verbunden, welche wiederum Signale von einem Drucksensor 19 erhält. Die zweite Schnittstellenelektronik 18 übermittelt ein Luftdrucksignal an die Korrektureinrichtung 15.

In der Korrektureinrichtung 15 läuft nun ein spezieller Algorithmus ab. Zum einen werden die Werte der Beschleunigungssensoren 11, 12 und 13 über eine definierte Fahrstrecke gemittelt und eine Nullage festgestellt. Zum anderen wird über den Luftdrucksensor 19 die Luftdruckdifferenz über eine definierte Wegstrecke festgestellt. Unter Zuhilfenahme der barometrischen Höhenformel und unter Bezugsetzung von Höhenänderung über eine bestimmte Fahrtstrecke wird dann eine durchschnittliche Neigung des Fahrzeugs um seine Querachse über diese Fahrstrecke ermittelt. Diese durchschnittliche Neigung wird nun zur Korrektur des Mittelungsergebnisses des Neigungssensors gegenüber der Querachse verwendet.

Die ermittelten Nullagen in den verschiedenen Raumachsen werden von der Korrektureinheit 15 dann an die Auswerteeinrichtung 14 zurückgegeben, welche aufgrund dieser Signale an eine weitere, nicht dargestellte Sicherheitselektronik, die tatsächlichen Informationen über die Lage des Fahrzeugs gegenüber den drei Raumachsen weitergibt.

Insgesamt ist mit der vorliegenden Erfindung eine einfache und kostengünstige Möglichkeit einer Kalibrierung eines Überrollsensors geschaffen. Da die angesprochenen Hardware-Komponenten bereits in den meisten Fahrzeugen vorhanden sind, kann das vorliegende erfindungsgemäße Verfahren besonders kostengünstig realisiert werden.

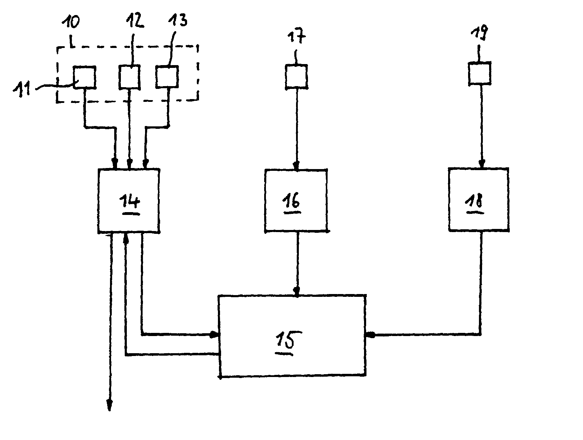

## Patentansprüche

1. Verfahren zur Kalibrierung eines Überrollsensors (10) für ein Fahrzeug, mit dem die Neigung eines Fahrzeugs in wenigstens einer Achse kontinuierlich bestimmt wird,
**dadurch gekennzeichnet,**
**daß** die Neigung in der wenigstens einen Achse fortwährend über eine bestimmte Wegstrecke gemittelt und der gebildete Mittelwert als Nullage angenommen wird, und
**daß** mittels eines Luftdrucksensors (19) und der barometrischen Höhenformel eine Höhenänderung über eine definierte Fahrstrecke ermittelt wird, daß die Höhenänderung in Bezug zur definierten Fahrstrecke gesetzt und damit die durchschnittliche Neigung des Fahrzeugs über diese Fahrstrecke berechnet wird und daß mit der berechneten durchschnittlichen Neigung die tatsächlich mit dem Überrollsensor ermittelte Neigung in Fahrtrichtung korrigiert wird.

2. Verfahren nach Anspruch 1,
**dadurch gekennzeichnet,**
**daß** die Neigungen des Fahrzeugs bezüglich der drei Raumachsen ermittelt und die zugehörigen Nullagen jeweils durch Mittelung bestimmt werden.

3. Verfahren nach Anspruch 1 oder 2,
**dadurch gekennzeichnet,**
**daß** als Luftdrucksensoren (19) diejenigen Sensoren verwendet werden, die in den Türen des Kraftfahrzeugs zur Seitenkollisionserkennung oder in der Motorelektronik zur Berücksichtigung des Einflusses des Luftdruckes auf die Leistung des Motors angeordnet sind.

## Claims

1. Method for calibrating a rollover sensor (10) for a vehicle, with which the inclination of a vehicle is continuously determined in at least one axis, **characterised in that**, the inclination in the at least one axis is constantly averaged over a specific route and the average value formed is assumed to be the zero position, and **in that** a change in altitude is detected over a defined driving route by means of an air pressure sensor (19) and the barometric formula, **in that** the change in altitude is related to the defined driving route and the average inclination of the vehicle is thus calculated over this driving route and **in that** the inclination in the driving direction actually detected by the rollover sensor is corrected with the calculated average inclination.

2. Method according to claim 1, **characterised in that** the inclinations of the vehicle are detected with respect to the three spatial axes and the respective associated zero positions are determined by averaging.

3. Method according to claim 1 or 2, **characterised in that** used as air pressure sensors (19) are sensors which are arranged in the doors of the vehicle for detecting lateral collision or in the engine electronics for taking into account the influence of the air pressure on the power of the engine.

## Revendications

1. Procédé d'étalonnage d'un capteur de retournement (10) d'un véhicule, définissant en continu l'inclinaison d'un véhicule sur au moins un axe,
**caractérisé en ce que**
- l'inclinaison sur au moins un axe est établie en continu sur un parcours défini et la valeur moyenne établie est prise comme position zéro,
- au moyen d'un capteur de pression d'air (19) et de la formule barométrique de l'altitude, on établit la variation de celle-ci sur un parcours défini et de cette variation, on déduit par le calcul l'inclinaison moyenne du véhicule sur ce parcours et on utilise cette moyenne calculée pour corriger l'inclinaison dans le sens de la marche donnée effectivement par le capteur de retournement.

2. Procédé selon la revendication 1,
**caractérisé en ce que**
les inclinaisons du véhicule par rapport aux trois axes spatiaux sont établies et les positions zéro correspondantes sont déterminées chaque fois en calculant la moyenne.

3. Procédé selon l'une quelconque des revendications 1 ou 2,
**caractérisé en ce que**
comme capteurs de pression d'air (19), on utilise les capteurs montés dans les portes du véhicule pour détecter une collision latérale ou montés dans l'électronique du moteur pour prendre en compte l'influence de la pression de l'air ambiant sur la puissance du moteur.
